(19) Europäisches Patentamt
European Patent Office
Office européen des brevets

(11) **EP 2 028 422 A2**

(12) **EUROPEAN PATENT APPLICATION**

(43) Date of publication:
**25.02.2009 Bulletin 2009/09**

(51) Int Cl.:
**F23N 5/24** *(2006.01)*     **F23R 3/28** *(2006.01)*

(21) Application number: **08014915.6**

(22) Date of filing: **22.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **24.08.2007  US 966013 P**

(71) Applicant: **Delavan Inc.**
**West Des Moines, IA 50265 (US)**

(72) Inventors:
• **Cornwell, Michael D.**
  **Bloomington, Minnesota 55438 (US)**
• **Goeke, Jerry L.**
  **West Des Moines, Iowa 50265 (US)**

(74) Representative: **Liska, Horst et al**
**Weickmann & Weickmann**
**Patentanwälte**
**Postfach 86 08 20**
**81635 München (DE)**

(54) **Variable amplitude double binary valve system for active fuel control**

(57)     A method of controlling combustion stability in a turbine engine having combustion stability control capability includes the steps of providing at least one pair of pulsating valves, mutually arranged in parallel with respect to fuel flow provided to a combustor of the turbine engine, detecting an amplitude and frequency of a pressure wave of at least one periodic combustion instability, selecting an amplitude, frequency and first phase shift, with respect to the pressure wave, of resultant fuel pulsations to reduce the amplitude of the pressure wave, translating the selected amplitude into a second, relative phase shift between each pulsating valve of at least one pair of pulsating valves, and commanding each pulsating valve of at least one pair of pulsating valves to operate at the selected frequency and a relative second phase shift with respect to one another, to yield a resultant fuel pulsation at the selected amplitude, frequency and first phase shift, with respect to the detected pressure wave of combustion instability.

FIG. 8

Description

## CROSS-REFERENCE TO RELATED APPLICATIONS

This application claims the benefit of priority to U.S. Patent Application Serial Number 60/966,013, filed August 24, 2007, which application is incorporated herein by reference in its entirety.

## BACKGROUND OF THE INVENTION

### 1. Field of the Invention

The subject invention is related to valves for actively modulating fuel flow to gas turbine engines. The subject invention is particularly suited for modulating fuel flow at high frequencies and varying modulation amplitudes to a combustion system in order to supply the fuel out of phase with combustion instabilities, controlling the combustion process to maintain combustion stability.

### 2. Description of Related Art

This invention is particularly applicable to aero gas turbine engines and industrial gas turbine engines for power generation with either liquid or gaseous fuels. Aero combustion applications of this invention include primary combustion as well as thrust augmentation combustion.

In gas turbine engines, unstable combustion is a principle constraint in the design of efficient low emission engines. Significant advancements in gas turbine emissions reduction are constrained by naturally occurring unstable combustion at lean conditions. Combustion instabilities are high amplitude pressure oscillations that occur as a result of the coherent fluctuations of heat release from the combustion process, which in phase with combustor acoustics, reinforces the acoustic waves resulting in thermo-acoustic instability.

Current field implemented methods to control combustion instability are primarily passive in nature, such as varying local fuel to air ratios, changes to the physical shape of the combustion liner or changes to the air swirl strength of the fuel injector and dome swirler. Passive controls are costly in that they are not always incorporated early in the design process, but rather discovered during initial testing when modification to the engine design is most costly along with the cost of delay in introduction of new engine designs. Often, compromises to the rest of the engine optimization results from the need to limit combustion instability, especially when it occurs late in the development process, often resulting in limits on engine performance.

Combustion instabilities that currently cannot be solved by these passive measures are prevented from occurring by programming the engine controller. The engine control operates around locations of instability that were identified on the flight envelope map during stationary engine testing and flight tests to prevent the engine from operating at these known conditions that could result in unstable combustion.

Recently, active control methods are being used to control combustion instability, as disclosed for example in U.S. Patent Application Publication 2007/0119147 to Cornwell et al., which is incorporated herein by reference in its entirety. For example, it is known to use wave cancellation technology where the fuel is injected and combusted out of phase with the harmful acoustic waves. This is accomplished by sensing the amplitudes, frequencies and phases of acoustic pressure waves, and then modulating fuel injection at the same frequency but at a phase where the combusted modulated fuel results in pulsating expanding combustion gas that is out of phase with the acoustic waves. In this process the combustion actually cancels the acoustic waves instead of reinforcing them.

The primary limitation in the development and deployment of this technology is the lack of valves that can modulate fuel at high variable frequencies and amplitudes and survive for the billions of cycles required. Recently, high speed valves have been disclosed in U.S. Patent Application Publication 2007/0151252 to Cornwell et al., incorporated herein by reference in its entirety, that are capable of the required speed of 1000 Hz modulation, or higher, by resonating at a natural frequency that allows the valve to open and close at the high frequency without large power consumption. These valves open and close at a fixed natural frequency, but vary modulation frequency by latching in the open and closed position. These valves can operate from their natural frequency down to being latched in a fixed position.

The primary limitation of traditional valves is that a single valve is not proportional in flow rate. The pressure drop of the flow across the valve must be varied to change flow rate, or multiple valves must be used in a digital valve configuration to change the amplitude of modulation. However, the valve of Cornwell (U.S. Pub. No. 2007/0151252 ), referenced above, may require multiple oscillation cycles when changing a bit position for a bit that is currently in the neutral position-that is, when some of the digital valve's bit orbits are not latched in an open or closed position. The number of cycles that it can take the digital valve bit to latch when it is not already latched in either an open or closed position is dependent upon the magnetic strength, i.e. coil current, and the proximity of the desired oscillation frequency to the natural frequency of the valve. This delay can make control more difficult if the combustion system's instability frequency is not close to the natural frequency of the valve, or large magnetic forces are not employed, which would require higher power consumption and the subsequent necessary increased heat dissipation from the coils. Applicants recognize that a principle requirement is that fuel modulation not change the mean fuel flow rate. This prevents changing fuel supply pressure from being used to vary modulation amplitude, as this would also change the mean fuel flow at the same time. If the mean flow changes in the process of changing the modulation amplitude, the characteristics of the instability change such that the amplitude of the instability keeps changing, making stable control virtually impossible.

The valve disclosed in U.S. Patent Application Publication 2007/0151252 uses digital valve technology to obtain the required capability of adjusting the fuel modulation amplitude. Digital valves for precise flow control are configured by assembling multiple valves (or bits) into assemblies, where each successive valves port has twice the flow of the previous bit. These bits are binary in nature with only an open or closed state. A 2-bit valve has three flow states in addition to the null state where both bits are closed for a total of four states. A 4-bit has sixteen states and an 8 bit valve would have 256 states. The various bits are open and closed in a binary mathematical manner to produce all the various states, where the increment between all states is equal to the smallest bit's port.

Applicants recognize, therefore, that it would be advantageous to provide a valve system and related methods that are capable of rapidly acting at high frequencies to temper combustion instability, but which are capable of providing a range of pressure amplitudes of fuel pressure to modulate varying degrees of instability. The present invention provides a solution to these needs.

## SUMMARY OF THE INVENTION

The subject invention is directed to a new and useful method of using two pulsating valves such as those disclosed in U.S. Patent Application Publication 2007/0151252 to obtain an infinite number of dynamic modulation amplitudes at any frequency at which the pulsating valves can operate, without shifting the mean fuel flow. The purpose of this invention is to reduce the size, weight, complexity and cost of the high-speed valve that can vary both frequency and modulation amplitude.

In accordance with one aspect of the invention, a method of controlling combustion stability in a turbine engine having combustion stability control capability is provided. The method includes the steps of providing at least one pair of pulsating valves, mutually arranged in parallel with respect to fuel flow provided to a combustor of the turbine engine, detecting an amplitude and frequency of a pressure wave of at least one periodic combustion instability, selecting an amplitude, frequency and first phase shift, with respect to the pressure wave, of resultant fuel pulsations to reduce the amplitude of the pressure wave, translating the selected amplitude into a second, relative phase shift between each pulsating valve of at least one pair of pulsating valves, and commanding each pulsating valve of at least one pair of pulsating valves to operate at the selected frequency and a relative second phase shift with respect to one another, to yield a resultant fuel pulsation at the selected amplitude, frequency and first phase shift, with respect to the detected pressure wave of combustion instability. Naturally, more than one pair of pulsating valves can be provided in parallel with one another, which then would result in any even number of valves mutually arranged in parallel. Such plurality of pairs of valves in accordance with the invention are preferably controlled synchronously, in accordance with the invention.

The first phase shift, with respect to the pressure wave can be any amount desired, but in accordance with one aspect is 180 degrees. It should be noted that the theoretical optimum first phase shift is 180 degrees, but due to lag time of instrumentation and control, the measured optimum first phase shift differs from 180 degrees. Control systems in accordance with the invention are adapted to control in light of the inherent lag of the system itself. The commanded selected frequency can be between about 0 and 1000Hz, and more preferably is between about 50 Hz and 1000 Hz.

The step of translation can include comparing the selected amplitude to a pre-programmed map to determine the phase shift with which the plurality of pulsating valves should be operated to yield the selected amplitude. The step of translation can alternatively or additionally include computing phase shift with which the plurality of pulsating valves should be operated to yield the selected amplitude.

The step of detecting an amplitude and frequency of a pressure wave, in accordance with one aspect, can be accomplished by way of one or more sensors provided in connection with the turbine engine. In accordance with the invention, any control algorithm can be utilized that is capable of determining the optimum phase angle and amplitude to minimize the amplitude of combustion instability. Slightly off optimum phase angles require increased modulation for a similar degree of stability control. Significant deviation from the optimum phase shift can reinforce the instability.

In accordance with one aspect, at least one of the pulsating valves can include a valve housing having an inlet portion for receiving fuel from a fuel source at an initial fuel flow rate; and an outlet portion for delivering fuel to a fuel nozzle at the initial fuel flow rate or at a modulated fuel flow rate depending upon a detected combustion condition, a primary fuel path defined within the valve housing and extending between the inlet portion and the outlet portion for conducting fuel through the valve housing, a valve shaft disposed within the valve housing and having a secondary fuel passage formed therein in fluid communication with the outlet portion of the valve housing, a valve rotor mounted for oscillatory movement on the valve shaft between a first magnetically latched position wherein fuel from the primary fuel path is admitted into the secondary fuel passage in the valve shaft for delivery to the outlet portion and a second magnetically latched position wherein fuel from the primary fuel path is prohibited from entering the secondary fuel passage in the valve shaft, electromagnetic means for alternately latching the valve rotor in the first and second magnetically latched positions to modulate the flow rate of the fuel delivered to a fuel nozzle in response to a detected combustion condition, and spring means for alternately moving the valve rotor from one magnetically latched position to another magnetically latched position.

In accordance with another aspect of the invention, a valve assembly for controlling flow of fuel in a gas turbine engine includes a supply conduit adapted and configured for receiving and carrying a flow of fuel, and a plurality of pulsating valve portions in fluid connection with the supply conduit, in parallel with one another with respect to fuel flow. In accordance with a preferred embodiment, two pulsating valve portions can be provided. The valve assembly can further include a single delivery conduit in fluid communication with an outlet of each of the pulsating valve portions, adapted and configured for conducting a flow of fuel therefrom to at least one fuel circuit of a fuel injector. The delivery conduit can be adapted and configured to indirectly feed a fuel injector by way of an intermediate manifold distributing fuel flow to a plurality of fuel injectors. Alternatively, the valve assembly can include a plurality delivery conduits, each in fluid communication with an outlet of respective pulsating valve portions, each conduit being adapted and configured for conducting a flow of fuel therefrom to at least one fuel circuit of a fuel injector. Each delivery conduit can be adapted and configured to indirectly feed a fuel injector by way of an intermediate manifold distributing fuel flow to a plurality of fuel injectors.

In accordance with this aspect, at least one of the pulsating valve portions can include a valve housing having an inlet portion for receiving fuel from a fuel source at an initial fuel flow rate; and an outlet portion for delivering fuel to a fuel nozzle at the initial fuel flow rate or at a modulated fuel flow rate depending upon a detected combustion condition, a primary fuel path defined within the valve housing and extending between the inlet portion and the outlet portion for conducting fuel through the valve housing, a valve shaft disposed within the valve housing and having a secondary fuel passage formed therein in fluid communication with the outlet portion of the valve housing, a valve rotor mounted for oscillatory movement on the valve shaft between a first magnetically latched position wherein fuel from the primary fuel path is admitted into the secondary fuel passage in the valve shaft for delivery to the outlet portion and a second magnetically latched position wherein fuel from the primary fuel path is prohibited from entering the secondary fuel passage in the valve shaft, electromagnetic means for alternately latching the valve rotor in the first and second magnetically latched positions to modulate the flow rate of the fuel delivered to a fuel nozzle in response to a detected combustion condition, and spring means for alternately moving the valve rotor from one magnetically latched position to another magnetically latched position. The spring means can include a torsion spring operatively associated with at least one valve rotor.

These and other features of the subject invention will be more readily understood to those having ordinary skill in the art from the following detailed description of the invention taken in conjunction with the incorporated graphical information.

## BRIEF DESCRIPTION OF THE DRAWINGS

So that those having ordinary skill in the art to which the present invention pertains will more readily understand how to employ the systems and methods of the invention, embodiments thereof will be described in detail hereinbelow with reference to the drawings, wherein:

FIG. 1 is a side elevational cutaway view of a portion of a gas turbine engine that includes instrumented fuel injectors, for use with the systems and methods of the present invention;

FIG. 2 is a cross-sectional view taken along line 2-2 of FIG. 1, through the combustion chamber of the gas turbine engine of Fig. 1, illustrating a plurality of instrumented fuel injectors;

FIG. 3 is also a cross-sectional view taken along line 2-2 of Fig. 1, through the combustion chamber of the gas turbine engine, illustrating an alternative arrangement of fuel injectors, wherein several of the injectors are instrumented and other injectors are uninstrumented;

FIG. 4 is a schematic illustration of a valve arrangement in accordance with the invention, in which a single proportional valve portion and a single pulsating valve portion are arranged in parallel;

FIG. 5 is a schematic illustration of a valve arrangement in accordance with the invention in which a single proportional valve portion is arranged in parallel with multiple pulsating valve portions, each of which feeds fuel only to a respective fuel injector;

FIG. 6 is a schematic illustration of a valve arrangement in accordance with the invention, in which a single proportional valve portion and a single pulsating valve portion are arranged in parallel as in Fig. 4, wherein each fuel injector is provided with respective proportional and pulsating valves;

FIG. 7 is a schematic illustration of a valve arrangement in accordance with the invention, in which a single proportional valve portion and a single pulsating valve portion are arranged in parallel as in Fig. 4, wherein a plurality of fuel injectors are provided with fuel from a single pulsating valve portion and a single proportional valve portion;

FIG. 8 is a schematic illustration of a system in accordance with the invention, including a pair of binary valves, arranged mutually in parallel, with regard to fuel flow therethrough;

FIG. 9 is a graphical example of the summation of two sinusoidal waves with a 30° relative phase shift, yielding a third, resultant sinusoidal wave;

FIG. 10 illustrates the relationship between phase shift and variation in amplitude and resultant phase of the combined wave from two waves having equal amplitude and frequency, with a mean flow rate being equal for all phase shifts;

FIG. 11 illustrates the relationship between phase shift and flow amplitude;

FIG. 12 illustrates a squared shaped non pure sine wave at 100 Hz used to produce the output shown in FIG. 13; and

FIG. 13 is a plot of the power spectrum of 100 Hz squared shaped non-pure sine wave from FIG. 12 showing the low amplitude of the higher harmonics.

## DETAILED DESCRIPTION

The subject systems and related methods are particularly useful in conjunction with active combustion control systems, such as those described in U.S. Patent Publication Number 2007/0119147 to Cornwell et al., for example, which application is hereby incorporated by reference in its entirety. Preferably, such active combustion control systems are designed to reduce localized thermo-acoustic combustion instabilities within the combustion chamber of a gas turbine engine. In such instances, the valve assemblies disclosed herein can be employed to pulsate or otherwise modulate fuel flow to individual fuel injectors at extremely high frequencies in excess of about 1000 Hz in proportion to detected combustion instability, while providing a wide range of adjustable amplitude and effective frequency of such fuel pulsations. The pulsating portion of valves in accordance with the present invention can be any suitable pulsating valve, but in accordance with a preferred aspect of the invention, are based on the pulsating valve assemblies set forth in US2007/0151252 to Cornwell et al., the disclosure of which is hereby incorporated by reference in its entirety.

The devices, systems and methods of the present invention are also intended to lower engine emissions, improve engine dynamics and maximize operating efficiency. In such instances, the valve assemblies of the subject invention can be employed to trim or otherwise actively adjust fuel flow to individual injectors to control stability as well as the temperature pattern factor in a combustor, thereby reducing hot spots and other detected undesirable combustion conditions.

Optionally, the subject valve assemblies and systems set forth herein can also be employed to self-tune an engine by actively adjusting localized fuel flow patterns over time, to maintain engine health. In accordance with the invention, it is possible to adjust the mean flow by adjusting the time period for which the valves are latched open or closed, in a manner that doesn't change the cycle period. When the valves are latched open for more time than closed, the mean flow rate is increased, when the cycle period is kept constant. The opposite occurs wherein a decreased mean flow rate is obtained when the valves are latched closed for more time than they are latched open. When the engine operating conditions do not produce instabilities, but the mean flow rate of one or more fuel injectors needs to be altered, valves in accordance with the invention can be operated at a benign frequency that does not excite combustion instabilities. Benign frequencies are frequencies that do not correspond to any acoustic modes of the combustor or any of their harmonic frequencies. For example, lower frequencies allow for more possible mean flow rate shift for the purpose of pattern factor control, as the difference in duty can be the greatest. In operation at the maximum frequency, which corresponds to the natural frequency of the valve, the duty cycle can only be 50% of the time open and 50% of the time closed. Therefore, at the maximum frequency no mean flow rate shift is possible with the subject technique. However, this is not a significant limitation because in service, most of the time the engine is operating, active combustion control is not required. When active combustion control is required, the instability frequency will typically be less than 700 Hz for typical aircraft gas turbine engines. Therefore, in accordance with the invention, if the valve were to be required to operate near the maximum valve frequency for the purpose of stability control, engine stability would have priority over pattern factor control. Because engine damage due to poor pattern factor control is a cumulative type of damage, not affected by short periods of small pattern deviations, the foregoing limitation is not significant. Alternatively, pattern factor control can be implemented by using a separate low speed trim valve in parallel with the high speed modulating valves.

It is envisioned that the valve assemblies disclosed herein can be used in conjunction with various types of fuel injectors, including for example, a two-stage fuel injector having main and pilot fuel flows. In such instances, the pilot fuel flow can be modulated or otherwise pulsed at high frequency relative to the main fuel flow to control combustion conditions. Alternatively, each of the pilot flow and the main flow can be controlled by a pulsating valve, operating jointly.

Applicants conceive that the systems, methods, and valve assemblies of the subject invention can be readily employed to modulate or otherwise pulse fuel flow at relatively high frequency in systems or processes outside the field of combustion technology. However, in accordance with a preferred aspect of the invention, the subject valves, systems and related methods are used in connection with gas turbine engines.

Gas turbine engines typically have sensors for measuring operating conditions, including, for example, turbine inlet temperature, compressor speed and pressure, total fuel flow rate to the combustor, and exhaust gas temperature and pressure, thermo-chemical characteristics of the combustor flame, oscillating pressure changes that are indicative of combustion instability, and, in some instances, fuel flow rate at one or more fuel injectors delivering fuel to the combustion chamber of the engine. Such engines also have control systems to utilize the data from such sensors, as well as actuators, which are actuated by the control systems to modify engine operating parameters. Among others, such actuators can include fuel control valves.

The devices, methods and systems of the present invention are particularly suited for use in reducing thermo-acoustic combustion instabilities within the combustion chamber of gas turbine engines: The methods are particularly well suited for use in combustion including those in industrial gas turbine engines, civil aircraft, military aircraft and the like.

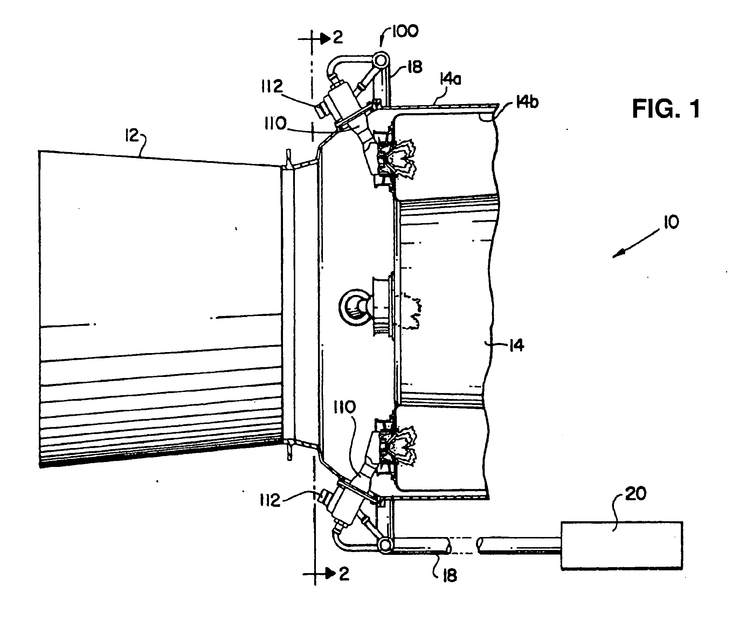

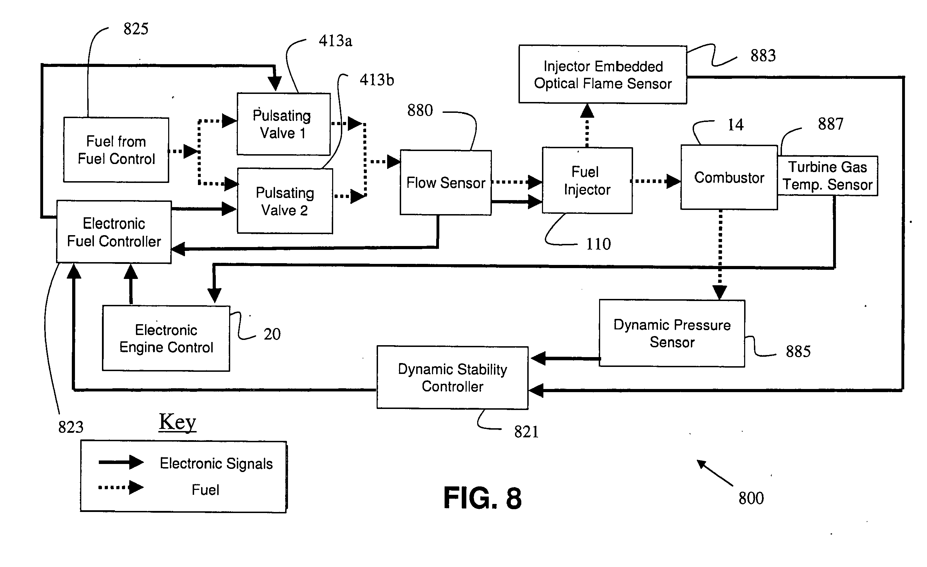

Referring now to the drawings, wherein like reference numerals identify similar features or aspects of the subject invention, there is illustrated in Fig. 1 a gas turbine engine 10 that can include, among other things, an active combustion control system, which can be adapted to control valve assemblies and to implement methods of the present invention. The system is designated generally by reference numeral 100. Figures 8-13 illustrate control aspects of the system 100 in accordance with the invention, as will be discussed in more detail hereinbelow.

In general, the gas turbine engine 10 includes a compressor 12, a combustion chamber 14 downstream from the compressor 12, and a turbine (not shown) downstream from the combustion chamber 14. The combustion chamber 14 includes a generally cylindrical outer combustion liner or casing 14a and a generally annular inner combustion liner 14b. Those skilled in the art will readily appreciate that other combustor configurations are possible, such as, for example, a can-type combustor.

The combustion control system 100 includes a plurality of fuel injectors 110, each mounted to the outer casing 14a of engine 10 for issuing atomized fuel into the inner combustion liner 14b of combustion chamber 14, as depicted. As explained in more detail below, one or more of the fuel injectors 110 of system 100 is preferably instrumented in such a manner so as to facilitate measurement of thermo-chemical characteristics of the flame within combustion chamber 14, oscillating pressure changes within combustion chamber 14, and the fuel flow rate through the injector itself. In addition, as explained in more detail below, a fuel modulation valve 112 is operatively associated each instrumented fuel injector 110 to control the flow of fuel delivered thereto during engine operation.

As shown in Fig. 1, fuel is delivered to the individual fuel injectors 110, and more precisely to the respective modulation valve portions 112 associated therewith, by way of a distribution manifold 18. In accordance with one aspect of the subject invention, the distribution manifold 18 receives metered amounts of fuel by way of an electronic engine control 20, which can be a full authority digital electronic control (FADEC) unit. The electronic engine control 20 accepts inputs (e.g., engine operating temperatures and pressures, shaft speeds and torques, environmental conditions) from various sensors on or within the turbine engine 10, and commands the position of a primary fuel-metering valve (not shown) based on software control laws developed for the specific engine application. The software control laws are written to optimize power output and drive the gas turbine engine in a safe operating region for a given power command and set of operating conditions. The electronic engine control 20 can cooperate with combustion control system 100, as well as other controls systems that may be provided in connection with the engine 10.

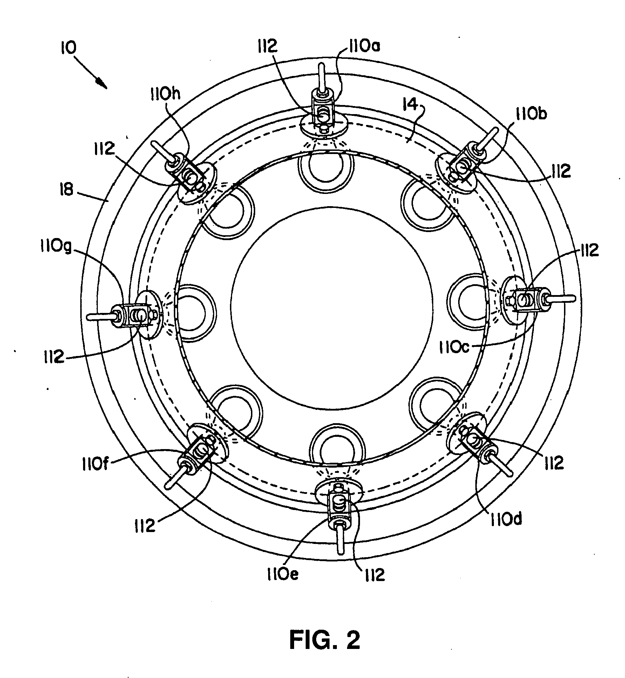

With reference to Fig. 2, there is illustrated a plurality of instrumented fuel injectors 110a-110h, which are arranged circumferentially about the periphery of the combustion chamber 14. In this arrangement, combustion characteristics including thermo-chemical flame characteristics and acoustic pressure changes can be monitored and measured in a highly localized manner throughout the entire periphery of the combustion chamber 14, by the sensing instrumentation associated with each injector 110a-110h. Thus, in instances in which the combustion characteristics in a certain location within the combustion chamber 14 are detected or otherwise measured relative to certain baseline values, the fuel pressure, and thus flow rate, to one or more of the injectors corresponding to that location in the combustor can be adjusted by the valve 112 associated therewith, so as to stabilize combustion or otherwise tune the engine. In the illustrated embodiment, and optionally with any embodiment in accordance with the invention, valves or valve elements can be integrated into the body of the fuel injectors 110a-110h. Alternatively or additionally, valves or valve elements can be arranged near the fuel injectors but not integrated therewith. Alternatively still, certain valve portions can be integrated into the fuel injector or arranged near the fuel injectors, while other valve portions can be arranged more distant from the fuel injectors.

Those skilled in the art should appreciate that the number of injectors shown in,Fig. 2 is for illustrative purposes only and should not be deemed to limit the subject disclosure in any manner. Furthermore, it is envisioned that more than one instrumented fuel injector can be associated with a single valve or pair of valves.

Thus, while each injector 110a-110h shown in Fig. 2 includes a respective fuel modulation valve portion 112, which can include, a single or multiple valves, depending on the particular implementation, it is envisioned that a particular fuel modulation valve portion 112 or valve set can be configured to modulate fuel to multiple fuel injectors, for example, to each injector within a particular quadrant or zone of the combustion chamber 14. In such an embodiment, then, each set of valves can typically be adapted to modulate flow to four, five or six fuel injectors. Accordingly, a manifold, such as manifold 18, may be used to distribute fuel from a separate valve assembly or portion 112 to multiple fuel injectors.

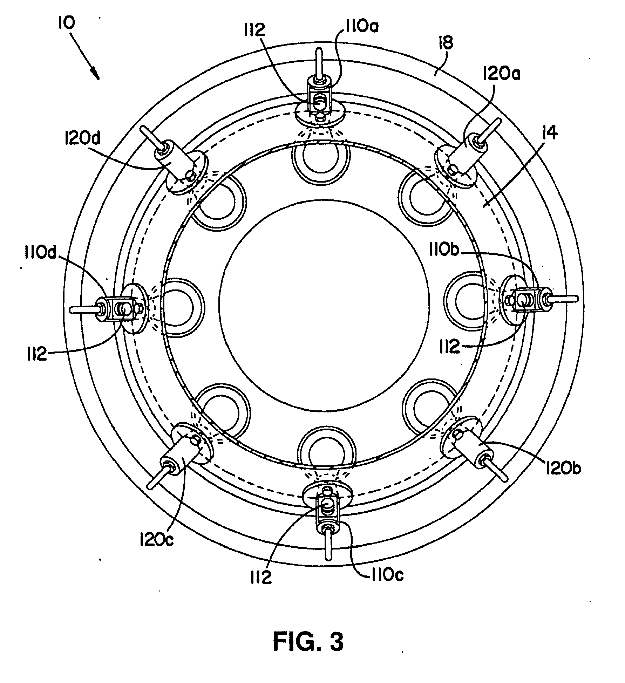

In an example alternative injector arrangement illustrated in Fig. 3, some of the fuel injectors provided in the engine 10 are instrumented and separately modulated with integral valve portions 112, while some injectors are not instrumented or separately modulated with integral valve portions. In particular, injectors 110a, 1 10b, 110c and 110d are instrumented so as to operate in accordance with the principles of the subject invention and include respective fuel modulation valve portions 112. In contrast, fuel injectors 120a, 120b, 120c and 120d are not instrumented, but instead they are configured in a more conventional manner to deliver atomized fuel to the combustion chamber 14 by the instrumented injectors. In such an arrangement, combustion characteristics are monitored and measured within certain combustion zones or quadrants of the combustion chamber 14. It is envisioned that such an arrangement may be sufficient to actively control combustion in many engine applications. In such a configuration, combustion characteristics within a certain combustion zone or quadrant can be actively controlled by modulating fuel flow to one or more of the instrumented injectors 110a-110d associated with that zone or quadrant. This can be accomplished with each instrumented injector 110a-110d having a respective modulation valve 112 or valve portion as shown, or in the alternative, a modulation valve or valve portion can be associated with more than one instrumented injector.

Those skilled in the art will readily appreciate that the circumferential position of the instrumented fuel injectors 110 and/or the number of instrumented fuel injectors 110 can vary depending upon the engine configuration and application. Indeed, it is envisioned and well within the scope of the subject disclosure that certain engine applications may only require a single instrumented injector 110, while the remainder of the fuel injectors in the engine are configured to operate in a more conventional manner.

Each instrumented fuel injector 110 of the active combustion control system 100, for use with the subject methods, may include a fuel mass flow sensor for monitoring fuel flow rates at each fuel injector. The fuel mass flow sensors, in accordance with one aspect, are adapted and configured to operate at line pressures of between 200 to 1500 psig, and are designed to cover a range of fuel flow from 25% to 100% and a modulation of about $\pm$ 20% of the average mean fuel flow to the nozzle. The location of the fuel mass flow sensor within the fuel injector can vary, as long as it is positioned to provide a precise measurement of the fuel rate flowing through a nozzle.

As described above, at least one injector 110, and if desired, all injectors, include(s) a fuel modulation valve portion 112 adapted and configured to modulate fuel pressure and thus also fuel flow rate to the injectors 110 in response to combustion instability detected by sensors provided, such as dynamic pressure sensors, flame sensors or others. More particularly, fuel modulation valve portions 112 are configured to modulate fuel flow in proportion to detected combustion instability up to about $\pm$20% of the mean fuel flow rate, at a frequency of up to 1000 Hz.

U.S. Patent Publication Number 2007/0151252 to Cornwell et al., which is incorporated herein by reference in its entirety, discloses three embodiments of a high speed fuel modulation valve that can be used in conjunction with the instrumented fuel injectors 110 of the combustion control system 100. Alternatively, simple binary valves having only open and closed positions and electro-mechanical proportional valves can be substituted for or used in conjunction with valves such as those described by U.S. Patent Publication Number 2007/0151252.

It is also envisioned and well within the scope of the subject disclosure that alternative types of valve actuators can be utilized with the active combustion control system 100 of the subject invention, to modulate fuel flow to the instrumented injectors 110. These include, for example, electromagnetic, magneto-strictive valve actuators, piezoelectric valve actuators, valve actuators employing cavitating piezoelectric fuel modulation, MEMS type actuators (thermal, fluid or mechanical amplifiers), electro-dynamic valve actuators, and rotary-type valve actuators.

In accordance with the subject methods and related systems, one or more valves can be utilized in the process of actively trimming and staging fuel in a gas turbine engine. Such valves, as set forth above, can be actuated by any suitable means, but preferably include electromechanical actuation. Such valves can include but are not limited to proportional and pulsating valves, which are capable of rapid movement. As set forth above, however, any of the valves described in U.S. Patent Publication Number 2007/0151252 to Cornwell, or variations thereof, can be utilized for as a proportional valve and/or as a pulsating valve, in accordance with the invention. Particularly, the Cornwell valve is capable of producing multiple discrete fuel flow rates, and therefore can serve the function of a proportional valve.

Additionally, separate proportional valves can be incorporated into the subject systems for controlling flow, and may be placed in series to the pulsating valves of the present invention, or in parallel thereto, modulating fuel flow to parallel fuel circuits and/or parallel fuel injectors.

In use, utilizing data obtained though the sensors described above, the electronic engine control 20 operates one or more valves associated with each of the fuel injectors 120a-120h, adjusting the pressure drop thereacross and thus, the flow of fuel therethrough. Accordingly, if combustion instability is indicated by the measurements taken from the sensors, fuel pressure can be adjusted to remedy such instability by actuating the respective valve(s). If a valve is capable of proportional control, such valve can be adjusted to result in a pressure drop yielding a particular mass flow rate range, then adjustments of any increment can be made accordingly. Moreover, one or more pulsating valves can be used to pulse fuel at a desired frequency to counteract combustion instability, as determined by the electronic engine control 20.

One or more of the fuel injectors 120a-120h can be provided fuel by a single or by multiple fuel circuits. For example, fuel to each fuel injector can be provided by a common fuel supply circuit or by separate main and pilot fuel circuits. The flow of fuel coming from each of these circuits and through the main and pilot fuel circuits within the injector 120 can be controlled with separate valves contained within an injector assembly. Alternatively, one or more of the valves can be arranged nearby, in connection with a conduit leading to the injector, or instead, in connection with a manifold feeding multiple injectors, as discussed hereinbelow.

In accordance with the invention, multiple pulsating valves are provided in conjunction in fuel systems designed in accordance with the invention. For example, in accordance with one aspect, flow of pilot fuel can be controlled by way of a first pulsating valve and flow of main fuel can be controlled by way of a second pulsating valve, for example. Further embodiments are described in further detail below.

The proportional fuel pressure amplitude control systems, valves and related methods are particularly useful in conjunction with active combustion control systems, such as those described in US 2007/0119147 to Cornwell et al., for example, which application is hereby incorporated by reference in its entirety. Preferably, such active combustion control systems are designed to reduce localized thermo-acoustic combustion instabilities within the combustion chamber of a gas turbine engine. In such instances, the valve assemblies disclosed herein can be employed to pulsate or otherwise modulate fuel flow to individual fuel injectors at extremely high frequencies in excess of about 1000 Hz in proportion to detected combustion instability, while providing a capability for adjustable amplitude of fuel pressure of such fuel pulsations. Suitable pulsating valves can be any suitable pulsating valve, but in accordance with a preferred aspect of the invention, are based on the pulsating valve assemblies set forth in US2007/0151252 to Cornwell et al., the disclosure of which, as set forth above, is hereby incorporated by reference in its entirety.

The devices, systems and methods of the present invention are also intended to lower engine emissions, improve engine dynamics and maximize operating efficiency. In such instances, the valve assemblies of the subject invention can be employed to trim or otherwise actively adjust fuel flow to individual injectors to control stability as well as the temperature pattern factor in a combustor, thereby reducing hot spots and other detected undesirable combustion conditions.

It is envisioned that the valve assemblies disclosed herein can be used in conjunction with various types of fuel injectors, including for example, a two-stage fuel injector having main and pilot fuel flows. In such instances, the pilot fuel flow can be modulated or otherwise pulsed at high frequency relative to the main fuel flow to control combustion conditions.

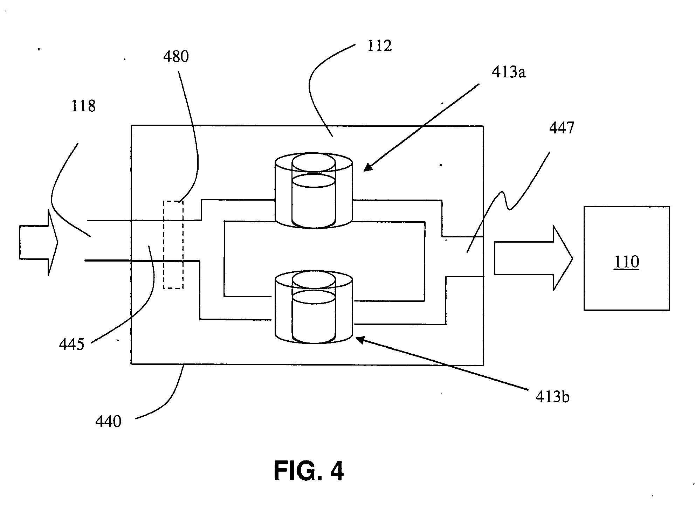

Figures 4-7 illustrate example embodiments of valve arrangements in accordance with the present invention in which each fuel injector 110 is fed by a plurality of pulsating valve portions 413a, 413b, arranged in parallel. The valve portions can be provided in the same housing, integrated with a fuel injector or separately provided between a main fuel distribution manifold and the fuel injectors.

Figure 4 illustrates the simplest arrangement of a valve 112 in accordance with the invention, in which each of the pulsating valve portions 413a, 413b are provided in a common housing 440, arranged in parallel with respect to fuel flow. Fuel is provided from a distribution manifold 118 to the valve 112, and subsequently to the fuel injector 110. An internal supply conduit 445 and delivery conduit 447 provide the internal fluid channels through which fuel flows during operation.

Fuel flow can therefore be modulated using either one of the pulsating valve portions 413a, 413b alone or in combination. Accordingly, although a preferred aspect of the invention is that the valves are adapted to function jointly, when commanded by a controller in order to provide a range of fuel flow pulsation frequencies and flow amplitudes, the valves can be utilized independently with the other valve portion serving as a backup. Such valve portions can also be rotated into and out of service to prolong the overall lifespan of the valve assembly 112.

In conditions of combustion stability, the desired fuel flow is set by way of a suitable control device, which can be one of the valve portions 413a, 413b, if such valve portion is capable of providing proportional fuel flow control. Alternatively, overall fuel flow control can take place external to the illustrated valve 112, such as prior to the distribution manifold 118. One or more of the pulsating valve portions 413a, 413b can be operated if combustion instability is detected, as determined and controlled by a control system, in order to promote and maintain combustion stability. The control system is preferably configured so as to operate the pulsating valve portions 413a, 413b so as to maintain a constant mean flow rate of fuel in operation. Alternatively, the pulsating valve portions 413a, 413b can be used to momentarily increase or decrease the flow rate of fuel.

Under normal operating conditions and without excessive combustion instability, the pulsating valve portions 413a, 413b can be maintained in a neutral (e.g. partially open) position, or alternatively, one can be left open, with the other closed, or both can be fully open, with fuel control being achieved by way of a separate valve, arranged in series for example, as mentioned above. Alternatively, if one or more of the pulsating valves is capable of proportionally controlling fuel flow, then that valve can be used to adjust fuel flow, while the other is maintained in a static position (closed, partially open or fully open). Alternatively, still, to achieve a wide variety of fuel mass flow rates, both valves can be operated in tandem to provide a wider range of possible flow conditions. Such operation becomes particularly advantageous in cases of combustion instability, allowing for selective phasing of fuel pulsations to achieve increased fuel flow at the desired frequency, as will be described in further detail below.

When both the pulsating valve portions 413a, 413b are operating, flow rate of fuel can be maximized and amplitude control of fuel pulses can be realized. This may be necessary, for example under conditions of combustion instability and high power demand. During operation of the pulsating valve portions 413a, 413b, fuel pulsations are generated at a commanded interval by the control system, which intervals can be in phase or out of phase by any amount desired to best counteract the detected combustion instability.

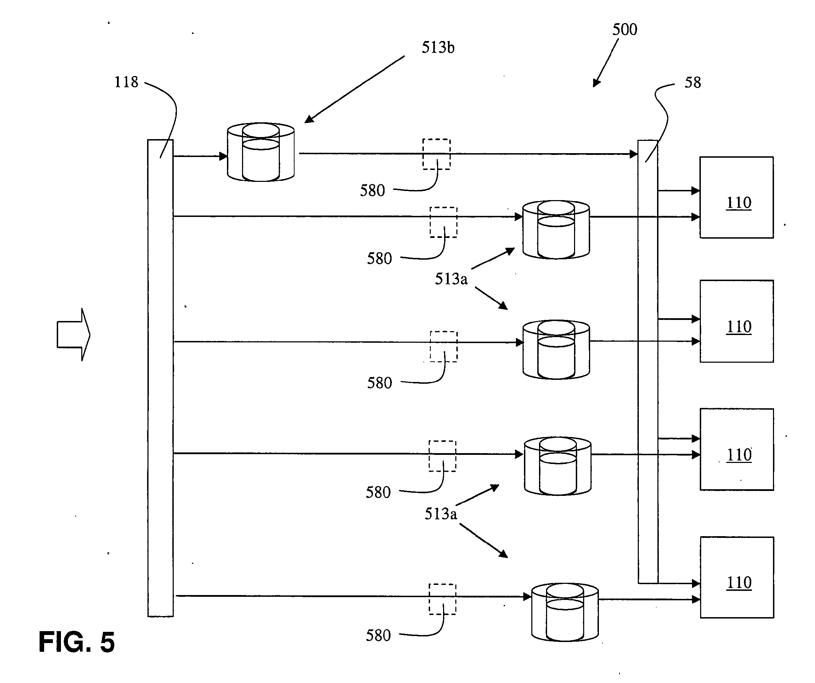

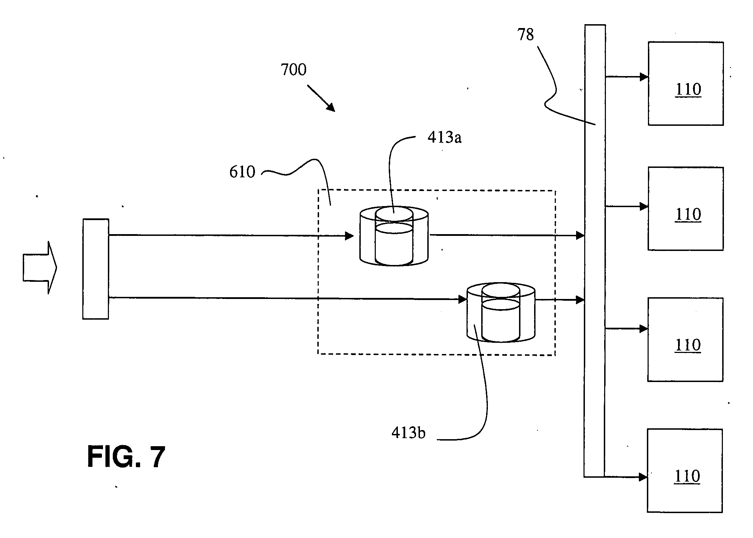

As illustrated in Figures 4-7, fuel can be delivered through each of the pulsating valve portions 413a, 413b separately all the way to a nozzle of the fuel injector and directly injected into the combustor. Alternatively, the fuel passing through each respective valve portion can be rejoined within the valve, as in the embodiment of Figure 4, into an intermediate manifold feeding one injector, or into an intermediate manifold feeding multiple injectors, as in the embodiment of Figure 7. It also may prove desirable for the purposes of weight and space savings to provide a single pulsating valve portion providing fuel to multiple fuel injectors via an intermediate manifold, in combination with distributed pulsating fuel control at each individual injector, as described in more detail below in connection with the embodiment of Figure 5.

As set forth above, it is often desirable to maintain a commanded mean flow rate of fuel over time, during fuel pulsations. Accordingly, flow rate sensors can be provided to measure the flow rate of fuel passing through the entire valve 112, by placing a flow rate meter in either the supply conduit 445 leading to or the delivery conduit 447 leading from the valve 112, such as in the position of the optional flow rate meter 480 illustrated in dashed lines in Figure 4. Alternatively, more precise measurement of amounts of fuel being contributed by each valve portion can be obtained by placing a flow rate meter in a conduit leading to or from only one of the valve portions, as illustrated, for example, by the placement of optional flow rate meters 580 in the embodiment of Figure 5.

Figure 5 illustrates an alternate embodiment for a valve system 500 in accordance with the present invention, in which a single pulsating valve 513b provides fuel to a common manifold 58, and is arranged in parallel with multiple pulsating valves 513a, each of which provides fuel to a single fuel injector. In the illustrated embodiment, fuel originates from a common fuel distribution manifold 118 and is distributed to the multiple pulsating valves 513a and the pulsating valve 513b associated with the manifold 58. Naturally, if necessary, more than one pulsating valve can be provided to control fuel flow to the manifold 58.

As mentioned above, fuel delivered to the injectors 110 from each respective pulsating valve 513a, and from the pulsating valve 513b via the manifold 58 can remain separate in separate fuel circuits through the fuel injector 110 into the nozzles in the combustor. Alternatively, the fuel flow can be combined prior to or within the injector 110 to be distributed through a single fuel circuit (e.g., the main fuel circuit) of the injector 110. Accordingly, if desired, any of the illustrated arrangements for fuel delivery in Figures 2-7 can be used in parallel with a more conventional fuel delivery system, such as one delivering only pilot fuel to the pilot fuel circuit of the fuel injectors 100, for example.

In the valve system 500 of Figure 5, placement of the pulsating valves 513a is preferably close to the injector 110, if not integrated therewith, as illustrated in Figures 1-3, in order to minimize the effects of internal damping by the fuel system of the high-frequency fuel pulsations. Similarly, close placement of the pulsating valve 513b near the manifold 58, and the injectors 110 is advantageous and preferable.

Operation of the system 500 is similar to that of the embodiment of Figure 4. However, as is apparent, in the embodiment of valve system 500, any fuel passing through the pulsating valve 513b is distributed equally to each of the fuel injectors 110. During operation, optional flow rate meters 580, in combination with the control system, can compare fuel flow rates to assure that an appropriate net amount of fuel is being delivered to the injectors 110, and that the valves are opening or closing appropriately to maintain the desired fuel flow rate. Alternatively, in lieu of direct fuel flow rate measurements, the control system can be adapted and configured to calculate fuel flow rates based on fuel pressure and/or and valve position sensors, which can alternatively or additionally be provided on the pulsating valves 513a, 513b.

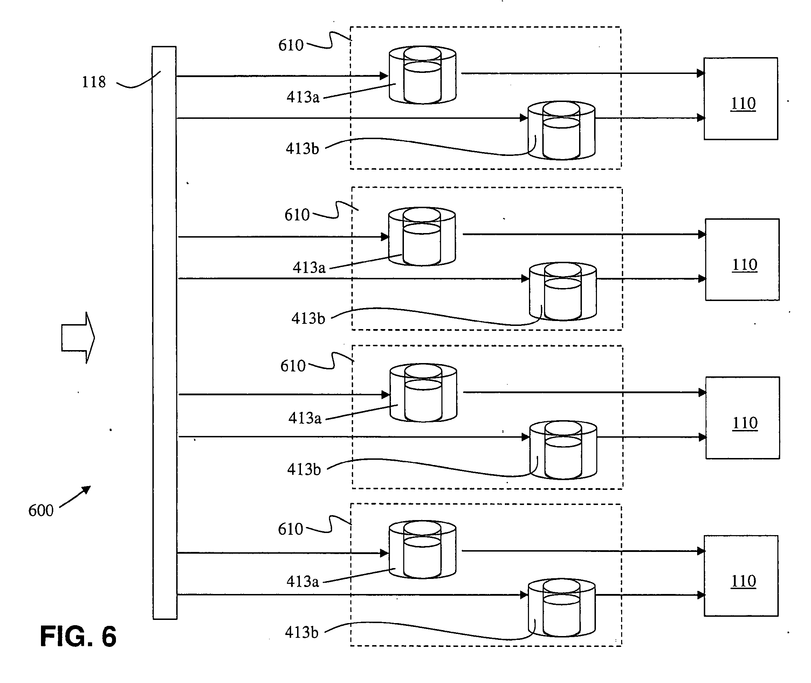

In the embodiment of Figure 6, which is a schematic illustration of a valve system 600 in accordance with the invention, each fuel injector 110 is provided fuel by a plurality of pulsating valve portions 413a, 413b. The pulsating valve portion 413a, 413b can be provided in a common housing 610, as illustrated, alternatively can be integrated with the body of each respective fuel injector 110, or can be provided separately, but still in a parallel arrangement. Accordingly, if desired, one valve portion can be provided within the body of the fuel injector, with the other valve portion being provided separately. In any case, it is preferable to arrange the pulsating valve portions 413a, 413b relatively near the fuel injector 110, to minimize fuel system damping.

Naturally, with respect to fuel flow, the fuel delivered from each of the pulsating valve portions 413a, 413b can be combined in an intermediate manifold prior to or within the fuel injector 110, or can remain as separate flows through the injector 110, and to the nozzles. Also, it is to be understood that while two pulsating valve portions 413a, 413b are illustrated, any number can be utilized in this or other embodiments to advantageous effect..

Figure 7 illustrates a simplified valve arrangement 700 for use in turbine engines, which includes a plurality of pulsating valve portions 413b, 413b that feed an intermediate distribution manifold 78, which in-turn feeds fuel to a plurality of fuel injectors 110. Due to the relative simplicity of the valve arrangement 700, it may be particularly suitable for small engines and/or in engines where excess space is at a minimum. As illustrated, the pulsating valve portions 413a, 413b can be provided in a common housing 610, as with other embodiments. Alternatively, the valve portions can be provided separately, which may be desirable due to space constraints in and around the engine. As mentioned above, it is preferred that the pulsating valve portions 413a, 413b be arranged as close to the fuel injectors 110 as possible. Accordingly, due to the presence of the distribution manifold 78, placement of the pulsating valve portion 413 relatively close to the manifold 78 is preferred. If so-desired, a second set of pulsating valve portions 413a, 413b can be provided in parallel, feeding a common manifold 78, for the purpose of redundancy, to provide increased fuel flow to the injectors 110, or for providing increased rate or amplitude of fuel pulsation with two phased or synchronized pulsating valves, respectively.

Figure 8 is a schematic illustration of a system 800 in accordance with the invention, illustrating a valve arrangement in which pulsating valve portions 413a, 413b are arranged in parallel. In Figure 8, electronic signals between.system elements are represented by a solid arrow, while fuel flow is represented by dashed arrows. As illustrated, fuel is supplied by way of a fuel control 825, which need not deviate from typical fuel controls of the art, to the pulsating valve portions 413a, 413b. As illustrated, a flow rate sensor 880 is provided to measure flow rate exiting a single conduit leading from the valves. As mentioned above, however, alternate arrangements for measuring flow rate and/or alternate placement of flow sensors are conceived.

Fuel passes from the valves 413a, 413b to the fuel injector 110, and into the combustor 14. Various sensors then communicate with one or more control units. More specifically, a temperature reading is fed back from a turbine temperature sensor 887 to an electronic engine control 20. A dynamic combustion stability controller 821 receives information from various sensors, such as an optical flame sensor 883 and a dynamic pressure sensor 885 to facilitate detection of combustion instability. Naturally, multiple sensors of each type can be provided to determine operating conditions more precisely throughout the engine and/or to provide redundancy.

The electronic engine control 20 manages operation of the engine in concert with other controls, including the stability control 821 and fuel control 823, for example. The electronic fuel controller 823 is adapted and configured to receive information from the stability control 821, and from the electronic engine control 20. The electronic fuel controller 823 is also adapted and configured to operate the proportional valve 414 and pulsating valve 413 in accordance with a program, in response to stability and power demand information, to provide the appropriate amount of power output and to promote combustion stability. Naturally, other control systems or control features can be incorporated into the system 800, such as an active pattern factor control system, for example. In active pattern factor control, the system can be augmented by including sensors that measure the temperature at the exit of the combustor and utilize this information to trim the fuel flow up or down at the fuel injectors that are associated with affecting the temperature at the desired location, for example.

Further, it is possible to accomplish fuel staging in turbine engines, utilizing valves in accordance with the invention. Particularly, embodiments such as those in Figures 5 and 6, where each injector is provided a set of independent valves, or the embodiment of Figure 7, if two or more such arrangements are provided, one set of valves can remained closed and their associated fuel injectors 110 can be shut down while another valve set and associated fuel injectors can remain active.

In accordance with the invention, methods for controlling the above-described valves, and the associated systems utilize wave reinforcement and cancellation principles to combine the fuel flow modulation capabilities of individual valves to produce a combined flow that is more effective in counteracting combustion instabilities than flow from either valve alone would be.

For example, in accordance with the invention, two individual valves of equal size operating together opening and closing simultaneously in the same direction (in phase - phase shift of 0 degrees) would effectively double the port area available to modulate the fuel, allowing for increased fuel flow amplitude than either valve would be capable of alone. At the other extreme of operation, if the same two valves again operate simultaneously but in opposite directions (completely out of phase - phase shift of 180 degrees) a steady state of mass fuel flow would occur, without appreciable modulation- pulsating or otherwise.

The resultant fuel flow from the pulsating valves has been experimentally shown to be substantially sinusoidal in shape, oscillating between a minimum mass flow rate and maximum mass flow rate. The fuel flow, then of two (or more) pulsating valves is effectively' superimposed to result in reinforcement or cancellation of the pulsating effect, depending on the relative phase shift of the valve operation.

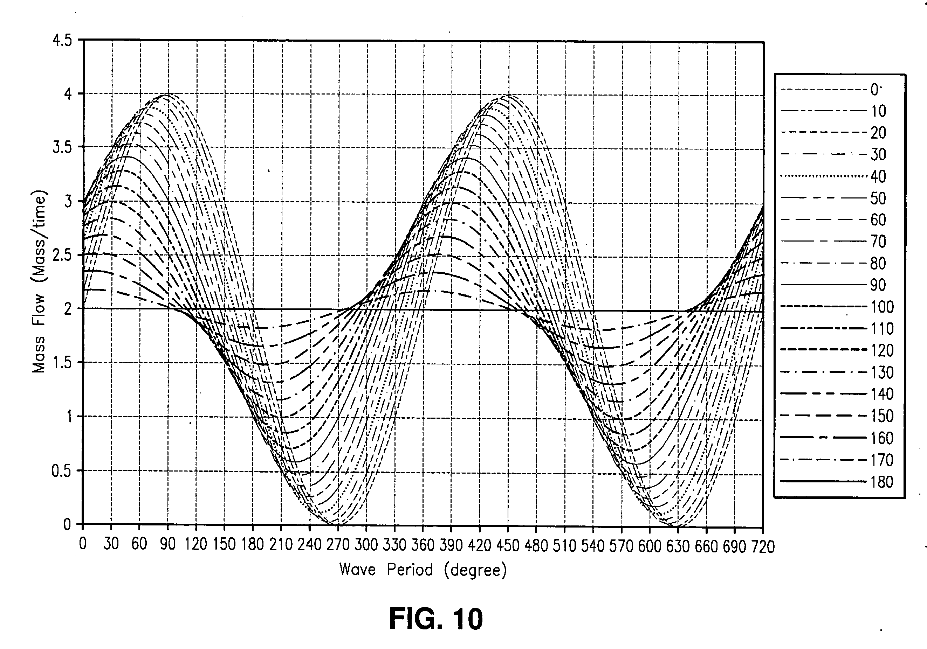

In the case of zero phase shift, the flow from all valves is synchronized, effectively doubling the amplitude of fuel pulsations in a combined resultant fuel flow. In the case of a fully out-of-phase pulsations, fuel flow variations largely cancel one another, yielding an essentially flat steady flow at the desired mean flow rate, as can best be seen in Figure 10, for example. When the relative phase between the two sine waves is shifted from in phase to 180° out of phase an infinite range of modulation amplitude between the maximum to no modulation is obtained.

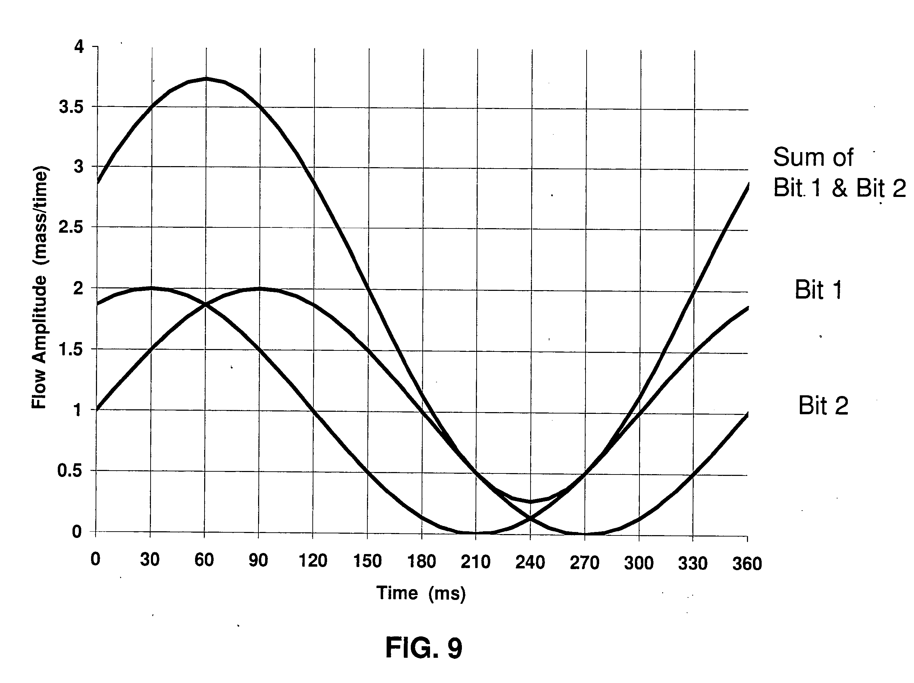

Referring to Fig. 9, there is shown a graphical example of the summation of two sinusoidal waves with a 30° relative phase shift, yielding a third, resultant sinusoidal wave. The mathematical expression that describes the addition of two sine waves at the same frequency with a phase shift is represented by the following expression:

$$\sin \omega t + \sin (\omega t + \varphi) = 2 \sin (\omega t + \varphi/2) \cos \varphi/2$$

Where φ (phi) the relative phase shift between the two initial sine waves, ω (omega) is the frequency of the waves, and t represents time. In general, the resultant wave is shifted by ½ the phase shift of the two contributing waves, while the amplitude decreases as a function of cosine of φ/2, which varies between 1 and 0 as φ varies between 0 to 180°. When the phase shift φ (phi) is zero, the new, resultant sine wave formed is twice the amplitude of, with no shift in phase from the contributing waves. As illustrated, the flow amplitude value of 1 is used as an example to describe the mean flow rate of one valve bit, with the maximum flow of each valve bit having a value of 2. Accordingly, the maximum combined flow of both bits would be 4, but because the flow from each of bits 1 and 2 is slightly out of phase, the maximum flow achieved in this example is less than 4. Of course, it is to be understood that the particular values illustrated are exemplary and are provided solely to help illustrate the invention.

Figure 10 illustrates the relationship between phase shift and variation in amplitude and resultant phase of the combined wave from two waves having equal amplitude and frequency. The mean flow rate is equal for all phase shifts with equal duty cycles, where the time the valve is latched open is equal to the time latched closed.

The amplitude of the resultant wave decreases as a function of cosine of φ/2, which varies between 1 and 0 as φ varies between 0 to 180°. However, such variation is nonlinear, due to the nonlinearity of the cosine function.

Therefore, in accordance with the invention, a combustion stability controller, such at the dynamic stability controller 821 of Figure 8, can be programmed so as to store, or to compute as needed, the phase shift of valve pulsations necessary to achieve a desired net fuel pulsation frequency and amplitude.

For example, if combustion instabilities having a relatively large magnitude are experienced, it is desirable to counteract such instabilities with fuel pulsations at a flow rate capable of effectively minimizing the combustion instabilities. The maximum flow rate from one valve may not be sufficient, so the present invention allows for fuel flow rates up to two times the mean flow rate.

In cases of relatively small combustion instabilities, it would be undesirable to over-correct for instabilities with a disproportionately large fuel pulsation, to avoid driving a different instability. Accordingly, by increasing the phase difference of the contributing fuel pulsations, the magnitude of the resultant fuel pulsation is minimized toward a mean fuel flow.

Accordingly, in accordance with the invention, a combustion stability controller, such at the dynamic stability controller 821 of Figure 8, can be programmed so as to store, or to compute as needed, the mass flow necessary, in addition to the phase shift of valve pulsations necessary to achieve a desired net fuel pulsation frequency and amplitude. Such controller therefore, receives information from sensors provided in connection with the engine, and computes the magnitude and phase of fuel modulation necessary to counteract the detected instability. The controller 821, directly or indirectly though another controller, such as the electronic fuel controller 823, then drives one or more of the pulsating valve portions 413a, 413b, with a relative phase shift if necessary, to yield the desired resultant fuel flow amplitude and phase.

If still further pulsating valve portions are provided, further flow conditions are possible and can yield, for example, in the case of four pulsating valve portions, a maximum fuel flow rate of four times that of any one valve individually. In very high flow applications it is preferred to use more than two valves, because port area increases proportional to the radius of the opening (closed by a rotor in the case of the Cornwell valve), while the moment of inertia increases proportional to the radius to the 4th power. Doubling the diameter of a valve therefore requires 16 times more magnetic force. The magnetic cross section increases proportional to the radius, resulting in a design constraint where there are no magnetic materials that will not saturate their flux density before the required magnetic force is obtained. Accordingly, physics and material properties limit maximum rotor diameters to approximately 9 to 12 millimeters for a valve to reciprocate at 1000 Hz. In accordance with the invention, it is preferred to use even numbers of valves of equal size. In the application of asymmetrical canceling, either due to odd numbers of valves or valves of unequal flow rates, there is no simple linear function for phase shifts, such as φ/2, for example. In the case of four pulsating valve portions- a flow rate of four times, and so on for six, eight and more pulsating valve portions. It is conceived that any even number of pulsating valve portions can advantageously be provided, such as, for example, between one and one hundred (2-100), valve portions, at any increment of 2 therebetween.

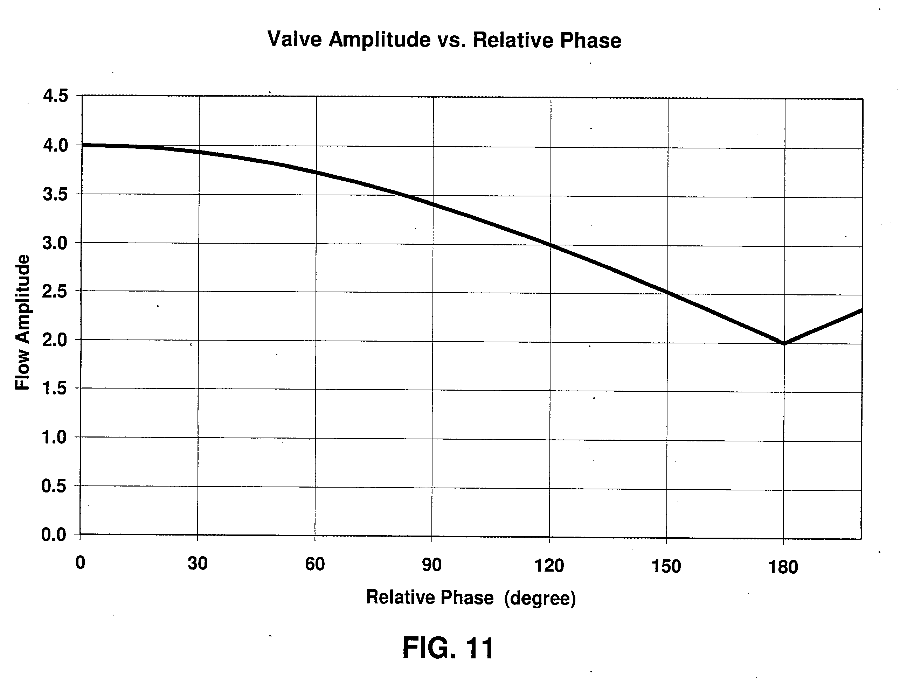

Figure 11 illustrates the relationship between phase shift and flow amplitude. As can be seen, flow amplitude is maximum at zero phase shift, and minimum at a phase shift of 180 degrees. Peak flow amplitudes are plotted (not average or mean flow). As mentioned above, it is to be understood that the mean flow rates used in this example are arbitrary and for any application varies based upon a specific engine's design requirements. Additionally, a plot of pressure versus phase shift has a similar appearance to the plot of flow amplitude versus relative phase shift.

In accordance with the invention, systems and valves are adapted and configured so as to maintain mean flow rate during failure, such as due to a loss of power, by having one valve fail to an open position, and the other valve fail to a closed position, or alternatively to have both valves fail to a neutral flow position, to yield a non-pulsating mean flow rate. Accordingly, if a valve described in U.S. Patent Application Publication 2007/0151252 is utilized, such an arrangement allows individual valve bits that don't fail to a neutral position to continue to be utilized to control combustion instabilities and other engine operating parameters.

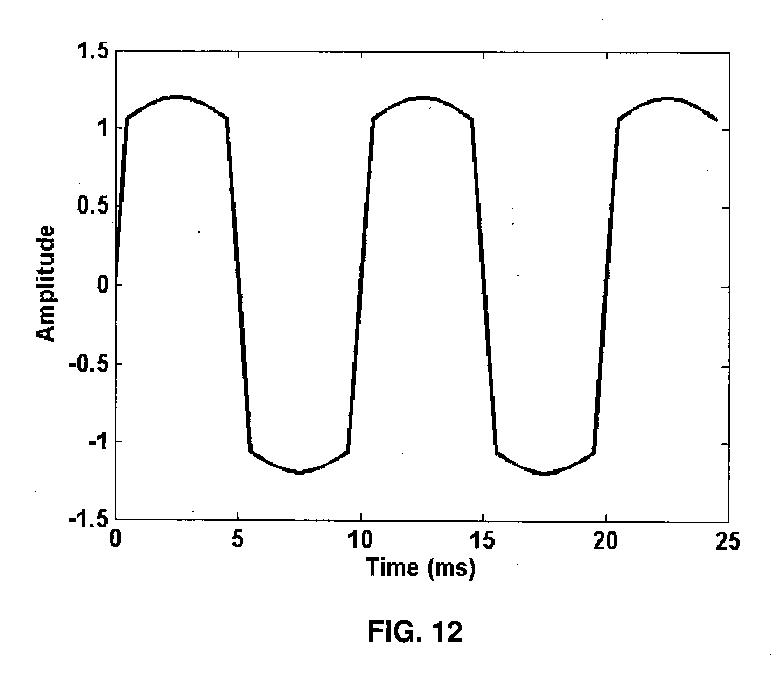

Figure 12 is a plot illustrating more closely the wave forms formed by pulsating valves at 100 Hz, in accordance with the invention. Specifically, the fuel pulsations at this frequency do not occur as pure sine waves, but as rounded-off oscillations with intervening linear slopes. The rounded-off maxima and minima are the result of the time where the valve is latched open or closed, respectively, while the rapid changes between maxima and minima represent the flow rate change when the rotor is in motion. Even if the rotor position could approach a square wave form, the fluid flow rates would be slightly sinusoidal in shape due to the inertia and compressibility of the fluid. At the high pressure gradients induced by the high oscillation frequencies, the compressibility effect of even a heavy fuel oil cannot be neglected.

For the purpose of providing a further example, a valve that has a natural frequency of 1000 Hz operated at 100 Hz spends 90% of the time in a fixed latched open or closed position and only moves 10% of the time. The mechanical motion would make a waveform that would appear more dramatically squared off, where flow is maintained at the maximum and minimum rates for longer periods of time. Moreover, the fuel, having inertia and compressibility, does not respond instantaneously to the motion of the valve. It has been shown experimentally that when the valve is operating above 200 Hz, the wave form of the fuel flow is very nearly a pure sine wave.

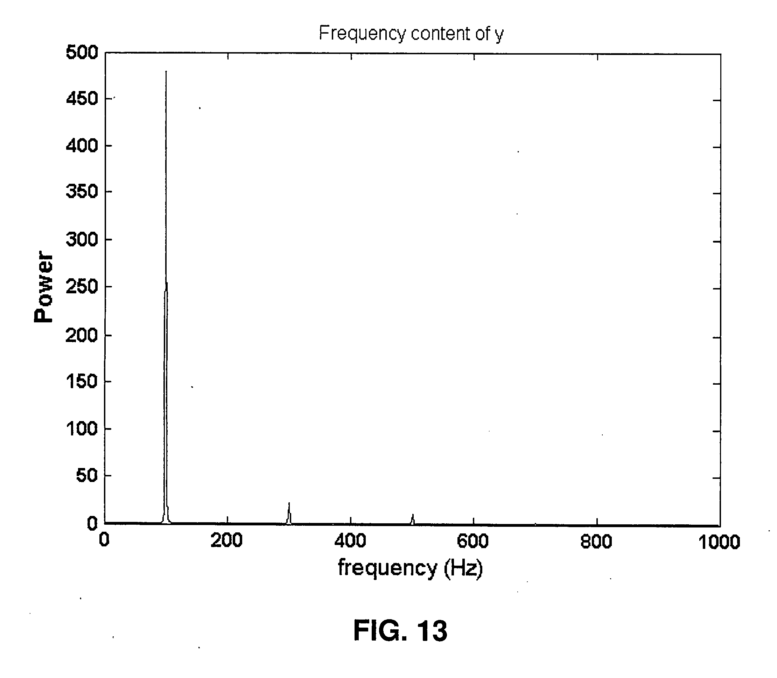

The imperfect sinusoidal shape, such as that illustrated in Figure 12, results in higher odd number harmonics. Any periodic square wave can be represented exactly with an infinite number of odd numbered harmonics. The first harmonic is the frequency of the square wave. The amplitudes of the higher harmonics decrease rapidly as the harmonic number is increased, as illustrated in Figure 13.

Valves preferred for use in accordance with the invention, and as described herein, also produce such higher odd number harmonics but they have been observed to be much lower in amplitude than the base frequency in both the fuel pressure and combustion response. Producing the second harmonic, an even harmonic, would at times experience more response in the combustion process but this has not been observed experimentally. These observed effects of less than perfect sinusoidal shapes are also clearly predicted with Fast Fourier Transforms (FFT) of a somewhat square shaped sine wave. For example, Fig. 13 shows the power spectrum produced with FFT of a squared shaped non-pure sine wave shown in Figure 12. In Figure 13 the 3rd, 5th and 7th harmonics are observable, but much lower in amplitude than the 1st harmonic at 100 Hz.

In accordance with the invention, a method of controlling combustion stability in a turbine engine having combustion stability control capability is provided. The method includes the steps of

a) providing at least one pair of pulsating valves, mutually arranged in parallel with respect to fuel flow provided to a combustor of the turbine engine;
b) detecting an amplitude and frequency of a pressure wave of at least one periodic combustion instability;
c) selecting an amplitude, frequency and first phase shift, with respect to the pressure wave, of resultant fuel pulsations to reduce the amplitude of the pressure wave;
d) translating the selected amplitude into a second, relative phase shift between each pulsating valve of at least one pair of pulsating valves; and
e) commanding each pulsating valve of at least one pair of pulsating valves to operate at the selected frequency and a relative second phase shift with respect to one another, to yield a resultant fuel pulsation at the selected amplitude, frequency and first phase shift, with respect to the detected pressure wave of combustion instability.

In general, it should be understood that the particular values described herein and in the drawings are for the purpose of providing a non-limiting example, and that the invention and appended claims are not to be interpreted as being limited only to those values. Moreover, although the systems and related devices and methods have been described with respect to preferred embodiments, those skilled in the art will readily appreciate that changes and modifications may be made thereto without departing from the spirit and scope of the subject invention. Particularly, it is to be understood that specific aspects of the invention described in connection with one embodiment can additionally be applied to any other embodiment set forth herein.

A method of controlling combustion stability in a turbine engine having combustion stability control capability includes the steps of providing at least one pair of pulsating valves, mutually arranged in parallel with respect to fuel flow provided to a combustor of the turbine engine, detecting an amplitude and frequency of a pressure wave of at least one periodic combustion instability, selecting an amplitude, frequency and first phase shift, with respect to the pressure wave, of resultant fuel pulsations to reduce the amplitude of the pressure wave, translating the selected amplitude into a second, relative phase shift between each pulsating valve of at least one pair of pulsating valves, and commanding each pulsating valve of at least one pair of pulsating valves to operate at the selected frequency and a relative second phase shift with respect to one another, to yield a resultant fuel pulsation at the selected amplitude, frequency and first phase shift, with respect to the detected pressure wave of combustion instability.

**Claims**

1. A method of controlling combustion stability in a turbine engine having combustion stability control capability, the method comprising the steps of:

   a) providing at least one pair of pulsating valves arranged in parallel with respect to fuel flow provided to a combustor of the turbine engine;
   b) detecting an amplitude and frequency of a pressure wave of at least one periodic combustion instability;
   c) selecting an amplitude, frequency and first phase shift, with respect to the pressure wave, of resultant fuel pulsations to reduce the amplitude of the pressure wave;
   d) translating the selected amplitude into a second, relative phase shift between each pulsating valve of at least one pair of pulsating valves; and
   e) commanding each pulsating valve of at least one pair of pulsating valves to operate at the selected frequency and a relative second phase shift with respect to one another, to yield a resultant fuel pulsation at the selected amplitude, frequency and first phase shift, with respect to the detected pressure wave of combustion instability.

2. The method of claim 1, wherein the commanded selected frequency is between about 50 Hz and 1000 Hz.

3. The method of claim 1, wherein the step of translation includes comparing the selected amplitude to a pre-programmed map to determine the phase shift with which the at least one pair of pulsating valves should be operated to yield the selected amplitude.

4. The method of claim 1, wherein the step of translation includes computing phase shift with which the at least one pair of pulsating valves should be operated to yield the selected amplitude.

5. The method of claim 1, wherein the step of detecting an amplitude and frequency of a pressure wave is accomplished by way of one or more sensors provided in connection with the turbine engine.

6. The method of claim 1, wherein at least one pulsating valve of the at least one pair of pulsating valves includes:

   a) a valve housing having an inlet portion for receiving fuel from a fuel source at an initial fuel flow rate; and an outlet portion for delivering fuel to a fuel nozzle at the initial fuel flow rate or at a modulated fuel flow rate depending upon a detected combustion condition;
   b) a primary fuel path defined within the valve housing and extending between the inlet portion and the outlet portion for conducting fuel through the valve housing;
   c) a valve shaft disposed within the valve housing and having a secondary fuel passage formed therein in fluid communication with the outlet portion of the valve housing;
   d) a valve rotor mounted for oscillatory movement on the valve shaft between a first magnetically latched position wherein fuel from the primary fuel path is admitted into the secondary fuel passage in the valve shaft for delivery to the outlet portion and a second magnetically latched position wherein fuel from the primary fuel path is prohibited from entering the secondary fuel passage in the valve shaft;
   e) electromagnetic means for alternately latching the valve rotor in the first and second magnetically latched positions to modulate the flow rate of the fuel delivered to a fuel nozzle in response to a detected combustion condition; and
   f) spring means for alternately moving the valve rotor from one magnetically latched position to another magnetically latched position.

7. A valve assembly for controlling a flow of fuel in a gas turbine engine, the valve assembly comprising:

   a) a supply conduit adapted and configured for receiving and carrying a flow of fuel; and
   b) at least one pair of pulsating valve portions in fluid connection with the supply conduit, in parallel with one another with respect to fuel flow.

8. The valve assembly of claim 7, wherein two pulsating valve portions are provided.

9. The valve assembly of claim 7, further comprising a single delivery conduit in fluid communication with an outlet of each of the at least one pair of pulsating valve portions, adapted and configured for conducting a flow of fuel therefrom to at least one fuel circuit of a fuel injector.

10. The valve assembly of claim 9, wherein the delivery conduit is adapted and configured to indirectly feed a fuel injector by way of an intermediate manifold distributing fuel flow to a plurality of fuel injectors.

11. The valve assembly of claim 7, further comprising a plurality of delivery conduits, each in fluid communication with an outlet of respective pulsating valve portions, each conduit being adapted and configured for conducting a flow of fuel therefrom to at least one fuel circuit of a fuel injector.

12. The valve assembly of claim 11, wherein each delivery conduit is adapted and configured to indirectly feed a fuel injector by way of an intermediate manifold distributing fuel flow to a plurality of fuel injectors.

13. The valve assembly of claim 7, wherein at least one of the pulsating valve portions includes:

a) a valve housing having an inlet portion for receiving fuel from a fuel source at an initial fuel flow rate; and an outlet portion for delivering fuel to a fuel nozzle at the initial fuel flow rate or at a modulated fuel flow rate depending upon a detected combustion condition;
b) a primary fuel path defined within the valve housing and extending between the inlet portion and the outlet portion for conducting fuel through the valve housing;
c) a valve shaft disposed within the valve housing and having a secondary fuel passage formed therein in fluid communication with the outlet portion of the valve housing;
d) a valve rotor mounted for oscillatory movement on the valve shaft between a first magnetically latched position wherein fuel from the primary fuel path is admitted into the secondary fuel passage in the valve shaft for delivery to the outlet portion and a second magnetically latched position wherein fuel from the primary fuel path is prohibited from entering the secondary fuel passage in the valve shaft;
e) electromagnetic means for alternately latching the valve rotor in the first and second magnetically latched positions to modulate the flow rate of the fuel delivered to a fuel nozzle in response to a detected combustion condition; and
f) spring means for alternately moving the valve rotor from one magnetically latched position to another magnetically latched position.

14. The valve assembly of claim 7, wherein the spring means includes a torsion spring operatively associated with at least one valve rotor.

FIG. 1

**FIG. 2**

EP 2 028 422 A2

FIG. 3

**FIG. 4**

FIG. 5

FIG. 6

FIG. 7

FIG. 8

FIG. 9

FIG. 10

## Valve Amplitude vs. Relative Phase

**FIG. 11**

EP 2 028 422 A2

FIG. 12

Frequency content of y

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 96601307 P
- US 20070119147 A, Cornwell
- US 20070151252 A, Cornwell